# EUROPÄISCHE PATENTSCHRIFT

(11) **EP 1 422 459 B1**
(45) Veröffentlichungstag und Bekanntmachung des Hinweises auf die Patenterteilung: **17.09.2008**
(21) Anmeldenummer: 03104217.9
(22) Anmeldetag: 17.11.2003
(51) Int. Cl.: F16L 5/04, F16L 5/02

(54) **Abdichtsystem**
Sealing system
Système d'étanchéité

(30) Priorität: 20.11.2002 DE 10254086
(43) Veröffentlichungstag der Anmeldung: 26.05.2004
(73) Patentinhaber: HILTI Aktiengesellschaft, 9494 Schaan (LI)
(72) Erfinder: Monden, Thomas, 87778, Stetten (DE); Klein, Manfred, 86916, Kaufering (DE)

(56) Entgegenhaltungen:
- EP-A- 0 486 299
- WO-A-00/68608
- DE-A- 10 217 174
- DE-A- 19 852 120

## Beschreibung

### Technisches Gebiet

Die Erfindung betrifft ein Halteelement mit einem ersten, als Befestigungsabschnitt ausgebildeten Schenkel zur Befestigung des Halteelements an einem Bauteil und mit zumindest einem zweiten, als Mantelsegment ausgebildeten Schenkel zur Fixierung eines Abdichtungsmittels an dem Bauteil sowie mit Eingreifmittel für den Eingriff in das Abdichtungsmittel. Weiter betrifft die Erfindung ein Abdichtungssystem zur Abdichtung einer Leitungsstrangdurchführung in einem Bauteil umfassend zumindest ein Abdichtungsmittel zur Abdichtung der Durchführung und zumindest zwei derartige Halteelemente zur Halterung des Abdichtungsmittels an dem Bauteil.

### Stand der Technik

Es sind sogenannte Brandschutzmanschetten bekannt, die eine intumeszierende Brandschutzmasse umfassen, die im Brandfall den zwischen einem Bauteil und einer durch dieses Bauteil hindurchgeführten Rohrleitung bestehenden Ringraum feuer- und rauchdicht verschliessen. Für unterschiedliche Durchmesser und Arten von Rohrleitungen ist ein Sortiment von Brandschutzmanschetten verschiedener Längen und Innendurchmesser üblich.

Die DE 198 52 120 A1 zeigt beispielsweise einen mit regelmässigen Öffnungen perforiert ausgeführten Blechmantel, der um die Rohrleitung herum gebogen wird. Über lose zugeordnete, separate winkelförmige Halteelemente, die längs aussen verlaufend an der Stirnseite die Brandschutzmanschette radial innen hintergreifen, ist diese an der Wand montierbar. Derartige Halteelemente müssen längenspezifisch je nach Brandschutzmanschette gefertigt werden.

Die in der DE 44 11 220 A1 gezeigte Rohrmanschette weist einen, um die Rohrleitung herum biegbaren sowie verschliessbaren Blechmantel auf, in dessen radialen Innern umfänglich verteilte intumeszierende Brandschutzmassen (z. B. Blähgraphit) angeordnet sind. Über lose zugeordnete, separate winkelförmige Halteelemente, welche radial aussen in eingestanzte Ösen am Blechmantel der Brandschutzmanschette einhängbar sind, ist diese an der Wand montierbar. Das Einstanzen der Ösen bedingt ein spezielles, kostenintensives Werkzeug.

Nachteilig an den bekannten Lösungen ist, dass zwar durch diese bekannten Manschetten ein erweiterter Anwendungsbereich der einzelnen Ausführung gegeben ist, aber deren Fertigung und teils deren zur Verfügungstellung von einer Vielzahl von Halteelementen aufwändig ist.

Aus der DE 102 17 174 A1 ist ein Halteelement sowie ein Abdichtungssystem zur Abdichtung einer Leitungsstrangdurchführung in einem Bauteil mit Halteelementen bekannt, wobei das Halteelement einen ersten, als Befestigungsabschnitt ausgebildeten Schenkel zur Befestigung des Halteelements an einem Bauteil und einen zweiten, als Mantelsegment ausgebildeten Schenkel zur Fixierung eines Abdichtungsmittels an dem Bauteil sowie Eingreifmittel für den Eingriff in das Abdichtungsmittel aufweisen.

### Darstellung der Erfindung

Der vorliegenden Erfindung liegt die Aufgabe zugrunde, ein flexibles Abdichtungssystem zu schaffen, das im Wesentlichen bei allen Leitungsstrangdurchführungen in einem Bauteil anwendbar ist, und das einfach herstellbar sowie einfach montierbar ist. Eine weitere Aufgabe der vorliegenden Erfindung ist die Schaffung eines einfach herstellbaren und flexibel einsetzbaren Halteelements zur Fixierung eines Gegenstandes an einem Bauteil.

Die Aufgabe ist durch die Merkmale des unabhängigen Anspruchs 1 gelöst. Vorteilhafte Weiterbildungen sind in den Unteransprüchen dargelegt.

Gemäss der Erfindung ist an zumindest einer der Seiten des zweiten Schenkels zwischen dem Befestigungsabschnitt und dem freien Ende des zweiten, als Mantelsegment ausgebildeten Schenkels ein weiteres Mantelsegment angeordnet und die Eingreifmittel sind an zumindest einem der Mantelsegmente vorgesehen.

Mittels des Eingreifmittels wird die Verbindung zwischen dem Abdichtungsmittel und dem Halteelement geschaffen. Die Eingreifmittel sind beispielsweise als Dorne oder Spitzen aus-gebildet und mit oder ohne Widerhaken versehen, die in das Abdichtungsmittel eindringen, so dass eine Verbindung zwischen dem Halteelement und dem Abdichtungsmittel geschahfen wird.

Das Abdichtungsmittel weist vorzugsweise derartige Materialeigenschaften auf, dass die Eingreifmittel in dass Abdichtungsmittel eindringen könen und diesen ausreichend fixieren. Vorteilhafterweise wird das Material des Abdichtungsmittels bei der Penetration der Eingreifmittel verdrängt. Um eine genügende Sicherung dieser Verbindung zu gewährleisten, kann das Abdichtungsmittel an seinen Aussenflächen mit einer Beschichtung versehen sein oder mit einer Hülle, z. B. aus einem geeigneten Gewebe, umgeben sein. Des Weiteren können Haftpunkte an dem zumindest einen Mantelsegment des Halteelements vorgesehen sein, die mit dem Abdichtungsmittel bei Kontakt der präparierten Fläche des Mantelsegments mit dem Abdichtungsmittel eine Klebeverbindung schaffen.

Der Befestigungsabschnitt ist mit zumindest einer Öffnung (z. B. mit einem Langloch) versehen, durch die zumindest ein Befestigungsmittel wie eine Schraube hindurchführbar ist. An zumindest einer Seite des zweiten Schenkels ist ein weiteres Mantelsegment für die Fixierung des Abdichtungsmittels angeordnet. Mit den zumindest zwei Mantelsegmenten kann das Halteelement an die Ausrichtung, Dimension sowie Art des zu fixierenden Abdichtungsmittels angepasst werden.

Vorzugsweise ist an zumindest einem der Mantelsegmente an dessen freien Ende ein, im Wesentlichen senkrecht zum Mantelsegment ausgerichteter Halteabschnitt vorgesehen. Der Halteabschnitt sichert das fixierte Abdichtungsmittel gegen Verschiebungen in und/oder senkrecht zur Bauteilebene. Ein Abdichtungsmittel beispielsweise zur Abdichtung einer Leitungsstrangdurchführung ist mit dieser Ausführung der erfindungsgemässen Halteelementen gegen Verschiebungen in Richtung der Längsachse des abzudichtenden Leitungsstrangs sicherbar. Bevorzugt weisen die zu fixierenden Abdichtungsmittel eine in einem Rastermass abgestufte Erstreckung senkrecht zur Bauteilebene, beziehungsweise eine in einem Rastermass abgestufte Höhe auf, so dass nur eine geringe Anzahl unterschiedlicher Halteelemente mit werkseitig abgebogenen Halteabschnitten zur Verfügung gestellt werden müssen, um die verschiedenen Ausführungen von Abdichtungsmittel an dem Bauteil fixieren zu können. Die Halteabschnitte sind vorzugsweise derart an den Halteelementen ausgebildet, dass die Halteelemente vor Ort anpassbar sind, um einen flexiblen Einsatz der Halteelemente für verschiedene Anwendungen zu ermöglichen. Die Halteabschnitte können auch in einer Ebene mit den Mantelsegmente liegen, so dass diese vor Ort entsprechend der Abmessungen der zu fixierenden Abdichtungsmittel umbiegbar sind. Zu diesem Zweck sind die Halteabschnitte beispielsweise mit Sollbiegestellen in einem vorbestimmten Raster versehen.

Vorteilhafterweise sind die Mantelsegmente scharnierartig verbunden. Damit ist die Stellung der zumindest zwei Mantelsegmente zueinander einfach vor Ort anpassbar womit bei unter-schiedlichen Querschnittsformen und Abmessungen der zu fixierenden Abdichtungsmittel nur eine Ausführung des Halteelements verwendet werden kann. Beispielsweise werden bei Rohren mit einem geringen Durchmesser die Mantelsegmente stärker zueinander abgebogen, als es bei Rohren mit einem grösseren Durchmesser erfolgt. Soll mittels dem erfindungsgemässen Abdichtsystem eine Durchführung abgedichtet werden, die von einem rechteckigen Leitungsstrang durchdrungen wird, kann in jedem der Ecken des Leitungsstrangs ein Halteelement vorgesehen werden, dessen Mantelsegmente derart abgebogen werden, so dass diese in einem rechten Winkel zueinander stehen. Das Scharnier zwischen den Mantelsegmenten kann durch eine Materialverjüngung oder durch eine Perforation entlang der Kontaktfläche zwischen den Mantelsegmenten ausgebildet sein. Weiter kann das Scharnier durch ein Filmscharnier oder durch ein mechanisches Scharnier gebildet sein.

Bevorzugt ist das Halteelement aus Blech als Stanz-/Biegeteil gefertigt. Mittels weniger Bearbeitungsvorgänge kann das Halteelement aus einem Stück Blech gefertigt werden. Des Weiteren kann das Halteelement beispielsweise aus einem Kunststoff in einem sogenannten Spritzgussverfahren hergestellt sein.

Mit dem erfindungsgemässen Abdichtungssystem können unterschiedliche Abmessungen und Querschnittsformen von Leitungsstrangdurchführungen z. B. in Wänden, Decken oder Böden sicher abgedichtet werden. Das Abdichtungsmittel wird an dem äusseren Umfang des Leitungsstrangs im Bereich der Durchführung im entsprechenden Bauteil angeordnet. Die Anzahl der angeordneten Halteelemente ist von den vorhandenen Gegebenheiten, insbesondere der Gesamtlänge des Umfangs des Leitungsstrangs, und/oder von den Anforderungen, insbesondere an die Sicherheit, des zu erstellenden Abdichtsystems abhängig. Dabei können mehrere Halteelemente nebeneinander entlang des gesamten Umfangs angeordnet werden, so dass das Abdichtungsmittel vollständig an dessen äusseren Umfang von den Mantelsegmenten der Halteelemente eingefasst ist.

Vorzugsweise umfasst das Abdichtungsmittel ein Gewebeband, auf dem ein Inlay aus einem intumeszierenden Material angeordnet ist. Dieses Abdichtungsmittel eignet sich für einen brandsicheren Verschluss der Leitungsstrangdurchführung. In einem Brandfall expandiert das intumeszierende Material und dichtet die Durchführung rauchgasdicht ab. Mittels den Eingreifmitteln der Halteelemente, die in das Gewebeband des Abdichtungsmittels eingreifen, ist das Abdichtungsmittel sicher an dem Bauteil gehalten, auch wenn das intumeszierende Material aufgrund dessen Materialeigenschaften für eine derartige Verbindung zwischen den Mantelsegmenten der Halteelemente und dem Inlay nicht geeignet ist.

In einer erfindungsgemässen Variante dazu umfasst das Abdichtungsmittel ein Gewebeband, auf dem ein Inlay aus einem, bei Zutritt von Flüssigkeiten quellfähigen Material angeordnet ist. Bei Zutritt einer Flüssigkeit, z. B. Wasser, expandiert das quellfähige Material und dichtet die Durchführung flüssigkeitsdicht, beziehungsweise wasserdicht ab. Mittels den Eingreifmitteln der Halteelemente, die in das Gewebeband des Abdichtungsmittels eingreifen, ist das Abdichtungsmittel sicher an dem Bauteil gehalten, auch wenn das quellfähige Material aufgrund dessen Materialeigenschaften für eine derartige Verbindung zwischen den Mantelsegmenten der Halteelemente und dem Inlay nicht geeignet ist.

Bevorzugt ist das Abdichtungsmittel ablängbar und vorzugsweise ist das Abdichtungsmittel um den Leitungsstrang herumlegbar. Das Abdichtungsmittel wird entsprechend der Länge des Umfangs des abzudichtenden Leitungsstrangs abgelängt und um den Leitungsstrang herumgelegt. Das Abdichtungsmittel weist zu diesem Zweck eine Flexibilität auf, die eine Anpassung des Abdichtungsmittels an verschiedene Querschnittsformen, wie beispielsweise an eine rechteckige oder runde Querschnittsform des Leitungsstrangs in unterschiedlichen Dimensionen ermöglicht. Vorzugsweise ist das Abdichtungsmittel mit einem einfachen Schneidwerkzeug, wie beispielsweise einer Zange oder einem Messer ablängbar.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von Ausführungsbeispielen näher erläutert. Es zeigen:
- Fig. 1a, b: Jeweils eine perspektivische Ansicht auf eine Rohrdurchführung mit dem erfindungsgemässen Abdichtungssystem in zwei Montagevorgängen
- Fig. 2: eine perspektivische Ansicht auf ein aufgerolltes Abdichtungsmittel; und
- Fig. 3a, b: jeweils eine perspektivische Ansicht auf ein erfindungsgemässes Halteelement aus zwei unterschiedlichen Blickwinkeln.

Grundsätzlich sind in den Figuren gleiche Teile mit den gleichen Bezugszeichen versehen.

### Wege zur Ausführung der Erfindung

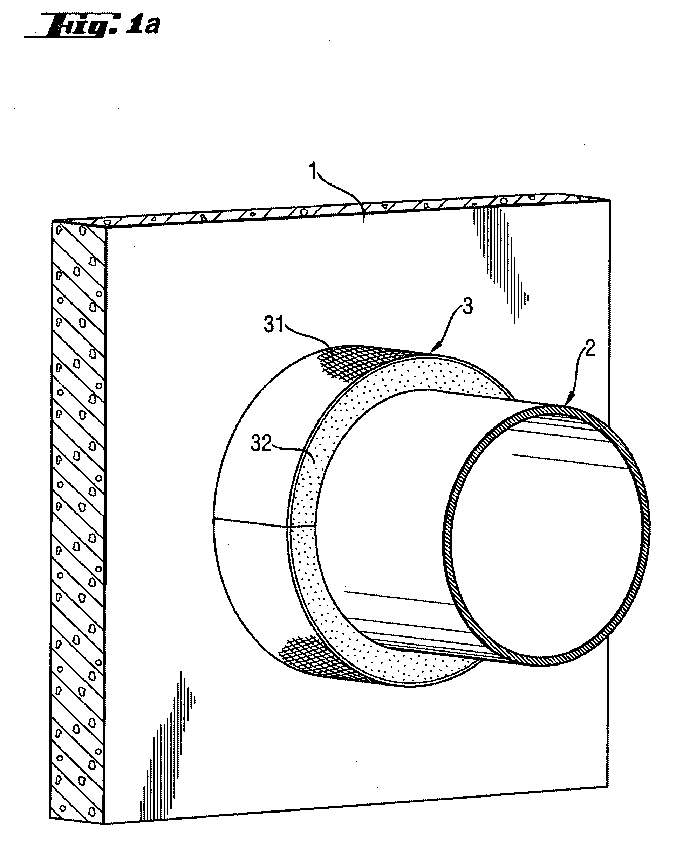

Eine perspektivische Ansicht auf eine Rohrdurchführung mit dem erfindungsgemässen Abdichtungssystem in einem ersten Montagevorgang ist in Fig. 1a dargestellt. Durch den dargestellten Wandausschnitt 1 ist eine Rohrleitung 2 hindurchgeführt, wobei die Durchführung mit dem erfindungsgemässen Abdichtungssystem abgedichtet wird. Das Abdichtungsband 3 wird entsprechend der vorhandenen Umfangslänge der Rohrleitung 2 abgelängt und um diese herumgelegt.

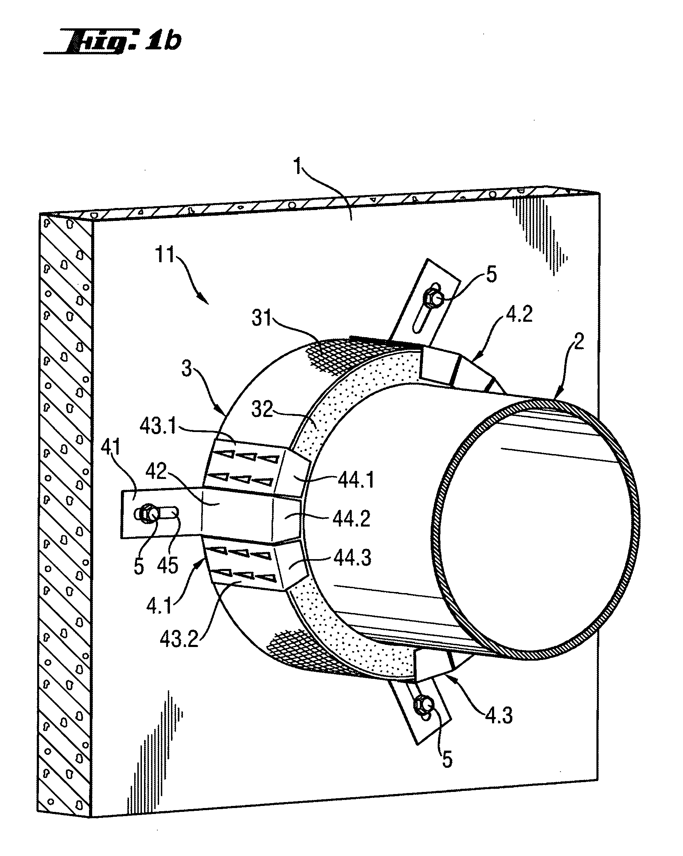

Fig. 1b stellt die in Fig. 1a gezeigte perspektivische Ansicht des erfindungsgemässen Abdichtungssystems in einem weiteren Montageschritt dar. Zur Fixierung des Abdichtungsbands 3 an der Wand 1 sind drei Halteelemente 4.1, 4.2 und 4.3 vorgesehen. Die konstruktiven Details der Halteelemente 4.1, 4.2 und 4.3 werden nachfolgend noch ausgeführt.

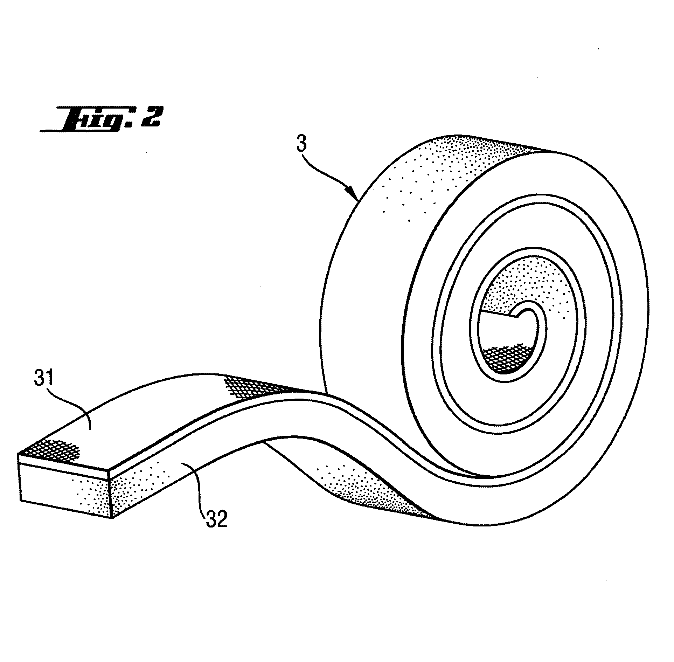

Fig. 2 zeigt eine perspektivische Ansicht auf ein aufgerolltes Abdichtungsmittel. Das Abdichtungsband 3 umfasst ein Gewebeband 31 als Trägerschicht, auf dem ein Inlay 32 beispielsweise mit einem Extruderverfahren aufgebracht ist. Für eine brandsichere Abdichtung der Leitungsstrangdurchführung wird ein Inlay 32 aus einem intumeszierenden Material auf dem Gewebeband 11 aufgebracht. Für eine flüssigkeitsdichte Abdichtung wird ein Inlay 32 aus einem, bei Flüssigkeitszutritt quellfähigen Material auf dem Gewebeband 31 aufgebracht. Das Abdichtungsband 3 ist aufroll- oder zusammenfaltbar und kann beispielsweise mittels einem Messer auf die gewünschte Länge abgelängt werden.

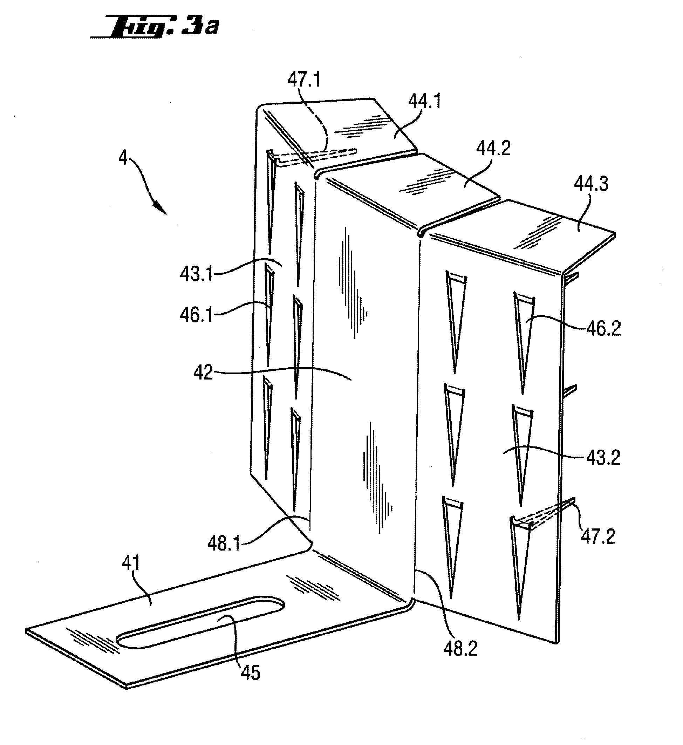

Eine perspektivische Ansicht auf ein erfindungsgemässes Halteelement ist in Fig. 3a dargestellt. Das Halteelement 4 umfasst einen Befestigungsabschnitt 41 und ein senkrecht zu diesem Befestigungsabschnitt 41 abgebogenes Mantelsegment 42. Der Befestigungsabschnitt 41 ist mit einem Langloch 45 versehen, durch das ein Befestigungsmittel (z. B. eine Schraube 5) zur Befestigung des Halteelements 4 an einem Bauteil hindurchführbar ist. An dem Mantelsegment 42 sind seitlich zwei weitere Mantelsegmente 43.1 und 43.2 scharnierartig angeordnet. Mittels zweier Materialverjüngungen sind die Scharniere 48.1 und 48.2 zwischen dem Mantelsegment 43.1 und dem Mantelsegment 42 sowie zwischen dem Mantelsegment 42 und dem Mantelsegment 43.2 ausgebildet. Mittels Stanzungen 46.1 in dem Mantelsegment 43.1 und Stanzungen 46.2 in dem Mantelsegment 43.2 sind Eingreifmittel 47.1 und 47.2 für den Eingriff des Halteelements 4 in einen Gegenstand, z. B. in das Abdichtungsmittel 3, an den Mantelsegmenten 43.1 und 43.2 ausgebildet.

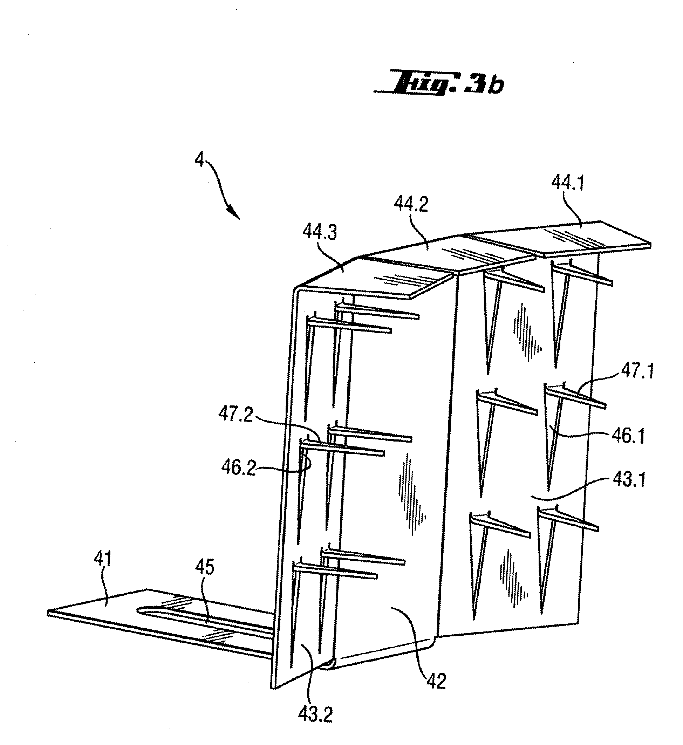

An den Enden der Mantelsegmente 42, 43.1 und 43.2, die dem Befestigungsabschnitt 41 gegenüberliegen, sind Halteabschnitte 44.1, 44.2 und 44.3 senkrecht zu den Mantelsegmenten 42, 43.1 und 43.2 abgewinkelt, die einen Gegenstand, z. B. das Abdichtungsmittel 3 zumindest teilweise umgreifen. Fig. 3b zeigt eine weitere perspektivische Ansicht aus einem anderen Blickwinkel auf das in Fig. 3a dargestellte Halteelement. Die ausgestanzten Eingreifmittel 47.1 und 47.2 sind als pfeilartige Spitzen ohne Widerhaken ausgebildet.

Zusammenfassend ist festzustellen, dass mit der Erfindung ein flexibles Abdichtungssystem geschaffen wurde, dass im Wesentlichen bei allen Leitungsstrangdurchführungen in einem Bauteil anwendbar ist und einfach herstellbar sowie montierbar ist. Die zur Verfügungsstellung von verschiedenen Ausführungen des Abdichtungssystems entsprechend der verschiedenen, in der Praxis verwendeten Leitungsstrang-Dimensionen und -Querschnittsformen entfällt. Des Weiteren wurde mit dem erfindungsgemässen Halteelement ein einfach herstellbares und flexibel einsetzbares Montagemittel zur Fixierung eines Abdichtungsmittels an einem Bauteil geschaffen.

## Patentansprüche

1. Halteelement mit einem ersten, als Befestigungsabschnitt (41) ausgebildeten Schenkel zur Befestigung des Halteelements (4) an einem Bauteil (1) und mit zumindest einem zweiten, als Mantelsegment (42) ausgebildeten Schenkel zur Fixierung eines Abdichtungsmittels (3) an dem Bauteil (1) sowie mit Eingreifmittel (47.1, 47.2) für den Eingriff in das Abdichtungsmittel (3), **dadurch gekennzeichnet, dass**
an zumindest einer der Seiten des zweiten Schenkels zwischen dem Befestigungsabschnitt (41) und dem freien Ende des zweiten, als Mantelsegment (42) ausgebildeten Schenkels ein weiteres Mantelsegment (43.1, 43.2) angeordnet ist und
die Eingreifmittel (47.1, 47.2) an zumindest einem der Mantelsegmente (42, 43.1, 43.2) vorgesehen sind.

2. Halteelement nach Anspruch 1, **dadurch gekennzeichnet, dass** an zumindest einem der Mantelsegmente (42, 43.1, 43.2) an dessen freien Ende ein, im Wesentlichen senkrecht zum Mantelsegment (42, 43.1, 43.2) ausgerichteter Halteabschnitt (44.1, 44.2, 44.3) vorgesehen ist.

3. Halteelement nach Anspruch 1 oder 2, **dadurch gekennzeichnet, dass** die Mantelsegmente (43.1, 42; 42, 43.2) scharnierartig verbunden sind.

4. Halteelement nach einem der Ansprüche 1 bis 3, **dadurch gekennzeichnet, dass** das Halteelement (4) aus Blech als Stanz-/Biegeteil gefertigt ist.

5. Abdichtungssystem zur Abdichtung einer Leitungsstrangdurchführung in einem Bauteil (1) umfassend zumindest ein Abdichtungsmittel (3) zur Abdichtung der Durchführung und zumindest zwei Halteelemente (4.1, 4.2, 4.3) zur Halterung des Abdichtungsmittels (3) an dem Bauteil (1), **dadurch gekennzeichnet, dass** die Halteelemente (4.1, 4.2, 4.3) nach einem der Ansprüche 1 bis 4 ausgebildet sind.

6. Abdichtungssystem nach Anspruch 5, **dadurch gekennzeichnet, dass** das Abdichtungsmittel (3) ein Gewebeband (31) umfasst, auf dem ein Inlay (32) intumeszierenden Materials angeordnet ist.

7. Abdichtungssystem nach Anspruch 5, **dadurch gekennzeichnet, dass** das Abdichtungsmittel (3) ein Gewebeband (31) umfasst, auf dem ein Inlay (32) von, bei Zutritt von Flüssigkeiten quellfähigem Material angeordnet ist.

8. Abdichtungssystem nach einem der Ansprüche 5 bis 7, **dadurch gekennzeichnet, dass** das Abdichtungsmittel (3) ablängbar ist und, dass das Abdichtungsmittel (3) um den Leitungsstrang (2) herumlegbar ist.

## Claims

1. Retaining element comprising a first arm designed as a fastening section (41) for fastening the retaining element (4) to a component (1) and comprising at least a second arm designed as a sleeve segment (42) for fixing a sealing means (3) to the component (1) and comprising engagement means (47.1, 47.2) for engagement in the sealing means (3), **characterised in that** another sleeve segment (43.1, 43.2) is arranged on at least one of the sides of the second arm between the fastening section (41) and the free end of the second arm designed as a sleeve segment (42) and the engagement means (47.1, 47.2) are provided on at least one of the sleeve segments (42, 43.1, 43.2).

2. Retaining element according to claim 1, **characterised in that** a retaining section (44.1, 44.2, 44.3) aligned essentially perpendicularly relative to the sleeve segment (42, 43.1, 43.2) is provided at the free end of at least one of the sleeve segments (42, 43.1, 43.2).

3. Retaining element according to claim 1 or claim 2, **characterised in that** the sleeve segments (43.1, 42; 42, 43.2) are connected together in a hinge-like manner.

4. Retaining element according to one of claims 1 to 3, **characterised in that** the retaining element (4) is made from sheet metal as a stamped/bent part.

5. Sealing system for sealing a pipe duct in a component (1) including at least one sealing means (3) for sealing the duct and at least two retaining elements (4.1, 4.2, 4.3) for holding the sealing means (3) on the component (1), **characterised in that** the retaining elements (4.1, 4.2, 4.3) are designed according to one of claims 1 to 4.

6. Sealing system according to claim 5, **characterised in that** the sealing means (3) includes a fabric tape (31) on which an inlay (32) of intumescent material is arranged.

7. Sealing system according to claim 5, **characterised in that** the sealing means (3) includes a fabric tape (31) on which an inlay (32) of a material capable of swelling upon the ingress of liquids is arranged.

8. Sealing system according to one of claims 5 to 7, **characterised in that** the sealing means (3) can be cut to length and that the sealing means (3) can be wrapped around the pipe.

## Revendications

1. Élément de retenue comprenant une première branche conformée en portion de fixation (41) pour fixer l'élément de retenue (4) à un élément de construction (1) et comprenant au moins une deuxième branche conformée en segment d'enveloppe (42) pour immobiliser un moyen d'étanchéité (3) sur l'élément de construction (1) ainsi que comprenant des moyens d'engagement (47.1, 47.2) destinés à être engagés dans le moyen d'étanchéité (3), **caractérisé en ce qu'**un segment d'enveloppe supplémentaire (43.1, 43.2) est disposé sur au moins un des côtés de la deuxième branche entre la portion de fixation (41) et l'extrémité libre de la deuxième branche conformée en segment d'enveloppe (42), et **en ce que** les moyens d'engagement (47.1, 47.2) sont prévus sur au moins un des segments d'enveloppe (42, 43.1, 43.2).

2. Élément de retenue selon la revendication 1, **caractérisé en ce qu'**il est prévu sur au moins un des segments d'enveloppe (42, 43.1, 43.2), à son extrémité libre, une portion de retenue (44.1, 44.2, 44.3) orientée sensiblement perpendiculairement au segment d'enveloppe (42, 43.1, 43.2).

3. Élément de retenue selon la revendication 1 ou 2, **caractérisé en ce que** les segments d'enveloppe (43.1, 42 ; 42, 43.2) sont reliés à la manière d'une charnière.

4. Élément de retenue selon l'une des revendications 1 à 3, **caractérisé en ce que** l'élément de retenue (4) est réalisé en tôle sous forme de pièce découpée et pliée.

5. Système d'étanchéité pour rendre étanche une traversée de faisceau de conduites dans un élément de construction (1), comprenant au moins un moyen d'étanchéité (3) pour rendre étanche la traversée et au moins deux éléments de retenue (4.1, 4.2, 4.3) pour retenir le moyen d'étanchéité (3) sur l'élément de construction (1), **caractérisé en ce que** les éléments de retenue (4.1, 4.2, 4.3) sont conformés selon l'une des revendications 1 à 4.

6. Système d'étanchéité selon la revendication 5, **caractérisé en ce que** le moyen d'étanchéité (3) comprend un ruban textile (31) sur lequel est disposée une couche (32) de matériau intumescent.

7. Système d'étanchéité selon la revendication 5, **caractérisé en ce que** le moyen d'étanchéité (3) comprend un ruban textile (31) sur lequel est disposée une couche (32) de matériau apte à gonfler en cas d'intrusion de liquides.

8. Système d'étanchéité selon l'une des revendications 5 à 7, **caractérisé en ce que** le moyen d'étanchéité (3) peut être mis à longueur et **en ce que** le moyen d'étanchéité (3) peut être appliqué autour du faisceau de conduites (2).
